# FASCICULE DE BREVET EUROPEEN

(11) **EP 3 371 449 B1**
(45) Date de publication et mention de la délivrance du brevet: **27.11.2019**
(21) Numéro de dépôt: 16809921.6
(22) Date de dépôt: 21.10.2016
(51) Int. Cl.: F02M 35/10, B60K 13/02, F02M 35/12

(54) **EMBOUT DE COL D'ENTRÉE D'AIR**
ENDSTÜCK EINES LUFTANSAUGKANALS
END-PIECE OF AN AIR INTAKE CONDUIT

(30) Priorité: 03.11.2015 FR 1560502
(43) Date de publication de la demande: 12.09.2018
(73) Titulaire: PSA AUTOMOBILES S.A., 78300 Poissy (FR)
(72) Inventeur: BELLUZ, Michael, 91190 Gif sur Yvette (FR)
(86) Numéro de dépôt international: PCT/FR2016/052739
(87) Numéro de publication internationale: WO 2017/077213

(56) Documents cités:
- EP-A2- 0 823 548
- DE-A1-102013 215 607
- DE-U1-202008 005 603
- FR-A1- 2 890 701
- FR-A3- 2 933 044
- US-A1- 2011 107 994

## Description

L'invention porte sur un embout de ligne d'admission d'air d'un moteur à combustion interne d'un véhicule automobile, tel qu'un moteur turbocompressé. L'embout comporte à une extrémité une interface avec une façade technique ou autre(s) pièce(s) d'admission d'air du véhicule et à l'extrémité opposée une interface avec un col d'entrée d'air.

Généralement, pour tout moteur d'un véhicule automobile équipé notamment d'un turbocompresseur situé à l'avant du moteur et d'un filtre à air à l'arrière du moteur, une pièce de raccordement appelée col d'entrée d'air est fabriquée et assemblée pour amener l'air sale jusqu'au filtre à air. Le col d'entrée d'air peut venir se fixer directement sur la façade (structure) du véhicule ou sur un résonateur, un déflecteur d'eau, ou encore par l'intermédiaire d'un embout de col d'entrée d'air.

Par exemple, le document FR2933044 décrit un agencement de fixation d'une conduite d'admission d'air directement sur le carénage d'un véhicule automobile. La face arrière du carénage comporte deux rails verticaux de chaque côté de l'ouverture d'admission d'air. Les rails en forme de L sont tournés vers l'ouverture et permettent au rebord de chaque extrémité de la conduite de coulisser verticalement entre les rails et la face arrière du carénage.

Un col (conduite) d'entrée d'air doit être redéveloppé à chaque nouveau projet moteur et/ou véhicule puisqu'il fait l'interface avec ces éléments. Une des principales contraintes est de redéfinir une nouvelle interface avec la façade ou autre(s) pièce(s) d'admission d'air suivant chaque fournisseur, en essayant d'améliorer celle-ci.

Le Demandeur a ainsi par exemple déjà développé un col d'entrée d'air comportant un embout séparé pour porter l'interface. Il est vissé par 2 vis au niveau de la façade du véhicule et clipé avec le col d'entrée d'air.

Les problèmes de vibrations sont néanmoins très récurrents au niveau de ces pièces conductrices d'air.

L'aspiration d'air crée au moins partiellement une exposition significative au bruit généré par le flux d'air lui-même, par les vibrations ainsi que par le moteur en marche.

Afin de réduire le bruit provoqué par l'aspiration de l'air, il existe différentes méthodes qui consistent par exemple à introduire des résonateurs dans le trajet d'écoulement de l'air.

Une autre solution consiste dans l'introduction de tuyaux spéciaux tels que des tuyaux formés de mousse ou des tuyaux textiles dans le canal d'aspiration de l'air pour réduire de manière significative le niveau de bruit, sans nécessiter d'espace supplémentaire, l'intégration des organes du moteur devant être la plus compacte possible afin notamment de répondre aux normes de sécurité.

Un des problèmes consiste alors à développer des moyens de maintien de la pièce intermédiaire entre deux éléments de conduction de l'air dans la ligne d'admission d'air du moteur tel que par exemple entre la façade du véhicule qui est la source d'entrée d'air et le col d'entrée d'air.

D'après les documents DE102005040850 ou DE102005049139, il est connu d'avoir des embouts portant l'interface avec un élément tubulaire tel qu'un col d'entrée d'air ou encore avec la façade du véhicule. Ces documents décrivent plus particulièrement le raccordement de deux éléments conducteurs d'air présentant au moins une section tubulaire incorporés l'un dans l'autre et maintenus fixés au moyen d'un dispositif de maintien. Le dispositif de maintien est une bande annulaire de serrage comportant des crochets ou des dents qui vont se lier avec le premier tube présentant une surface complémentaire ainsi qu'un bord comprenant un élément de retenue qui va correspondre avec un rebord du second tube de sorte à maintenir les deux tubes incorporés l'un dans l'autre au niveau de leur surface de contact.

Un but de la présente invention est de proposer une pièce intermédiaire standardisée entre la façade ou autre(s) pièce(s) d'admission d'air et le col d'entrée d'air dans la ligne d'admission d'air d'un moteur à combustion interne afin de n'avoir qu'une seule et même pièce optimisée pour tout moteur, ne générant plus de vibrations et permettant une minimisation des nuisances sonores perçues par un utilisateur du véhicule automobile sans altérer les performances du moteur à combustion interne.

Un embout de ligne d'admission d'air d'un moteur à combustion interne d'un véhicule automobile selon la présente invention est un embout comportant en partie avant une interface avec une façade technique ou autre(s) pièce(s) d'admission d'air du véhicule et en partie arrière une interface avec un col d'entrée d'air.

Selon la présente invention, l'interface de l'embout avec la façade ou autre(s) pièce(s) d'admission d'air comporte une première interface constituée de deux moyens de guidage, disposés chacun d'un côté d'une traverse d'ouverture d'air, et une seconde interface en partie supérieure sous forme d'une languette comprenant au moins un orifice destiné à recevoir tout moyen de fixation pour maintenir ledit embout sur la façade ou autre(s) pièce(s) d'admission d'air.

Selon la présente invention, les moyens de guidage de la première interface avec la façade ou autre(s) pièce(s) d'admission d'air sont des glissières en dépouille et incrustées d'ergots pour avoir un contact ponctuel et pincer l'embout à la façade ou autre(s) pièce(s) d'admission d'air.

La seconde interface est une languette par exemple en forme en Z épousant la façade ou autre(s) pièce(s) d'admission d'air.

L'interface de l'embout avec le col d'entrée d'air comporte préférentiellement au moins deux orifices dans lesquels vient se cliper le col d'entrée d'air.

Préférentiellement, l'embout comporte en outre en partie inférieure une interface additionnelle composée d'un orifice apte à recevoir un moyen de clipage avec un résonateur ou à intégrer un système de volet anti-neige.

Le résonateur ou le système de volet anti-neige, quand il est nécessaire, peut donc être intégré à l'embout.

L'embout est avantageusement à base de matériau polymère, éventuellement renforcé, il peut ainsi être réalisé en matière plastique.

Une ligne d'admission d'air de la présente invention est une ligne d'admission d'air d'un moteur à combustion interne d'un véhicule automobile équipée d'un tel embout en tant que pièce intermédiaire entre la façade technique ou autre(s) pièce(s) d'admission d'air du véhicule et le col d'entrée d'air.

Un moteur de la présente invention est un moteur à combustion interne équipé d'une telle ligne d'admission d'air.

Un véhicule de la présente invention est un véhicule automobile équipé d'un tel moteur à combustion interne.

D'autres caractéristiques et avantages de la présente invention apparaîtront à la lecture de la description qui va en être faite d'exemples de réalisation, en relation avec les figures des planches annexées, dans lesquelles :
La figure 1 est une vue schématique en perspective de dessus d'un embout de la présente invention servant de pièce intermédiaire de ligne d'admission d'air entre une façade et un col d'entrée d'air.
La figure 2 est une vue schématique en perspective de côté d'une interface avec une façade ou autre(s) pièce(s) d'admission d'air en partie avant d'un embout de la présente invention.
La figure 3 est une vue schématique en perspective de dessus d'un embout de la présente invention fixé à une façade au niveau de l'interface illustrée sur la figure 2.
La figure 4 est une vue schématique d'un moyen de guidage disposé d'un côté de l'interface avec une façade ou autre(s) pièce(s) d'admission d'air illustrée sur la figure 2.
La figure 5 est une vue schématique en perspective de côté d'une interface avec un col d'entrée d'air en partie arrière d'un embout de la présente invention.
La figure 6 est une vue schématique en perspective de côté d'un embout de la présente invention fixé à un col d'entrée d'air au niveau de l'interface illustrée sur la figure 5.
La figure 7 est une vue schématique sensiblement de face d'une interface avec un col d'entrée d'air en partie arrière d'un embout de la présente invention.
La figure 8 est une vue schématique sensiblement de face de l'interface illustrée sur la figure 7 comportant en partie inférieure une interface additionnelle composée d'un orifice apte à recevoir un moyen de clipage avec un résonateur ou à intégrer un système de volet anti-neige.
La figure 9 est une vue schématique sensiblement de côté d'un moyen de clipage avec un résonateur, positionné au niveau de l'orifice de l'interface additionnelle illustrée sur la figure 8.
La figure 10 est une vue schématique en perspective de côté d'un embout de la présente invention accroché à un résonateur par l'intermédiaire du moyen de clipage illustré sur la figure 9.
La figure 11 est une vue schématique zoomée de l'accrochage d'un embout de la présente invention à un résonateur illustré sur la figure 10.
La figure 12 est une vue schématique d'un exemple d'embout selon l'invention intégrant un résonateur.

Un véhicule automobile est couramment équipé d'un moteur à combustion interne pour pourvoir à son déplacement. Le moteur à combustion interne est en relation aéraulique avec une ligne d'admission d'air qui est apte à approvisionner le moteur à combustion interne en air. La ligne d'admission d'air est logée à l'intérieur d'un compartiment avant du véhicule automobile, le compartiment avant logeant également le moteur à combustion interne.

A cet effet, la ligne d'admission d'air comporte par exemple successivement selon un sens d'écoulement de l'air à l'intérieur de la ligne d'admission d'air : une fenêtre avant d'admission d'air qui équipe une façade avant du véhicule automobile ; un col d'entrée d'air ; un filtre à air ; un compresseur d'un turbocompresseur et une vanne de dosage de l'air, telle qu'un boîtier papillon. Le filtre à air est prévu pour retenir des impuretés véhiculées par l'air circulant à l'intérieur de la ligne d'admission d'air. Le compresseur est apte à compresser l'air préalablement à son admission à l'intérieur du moteur à combustion interne. La vanne de dosage est destinée à contrôler et réguler un débit d'air admis à l'intérieur du moteur à combustion interne.

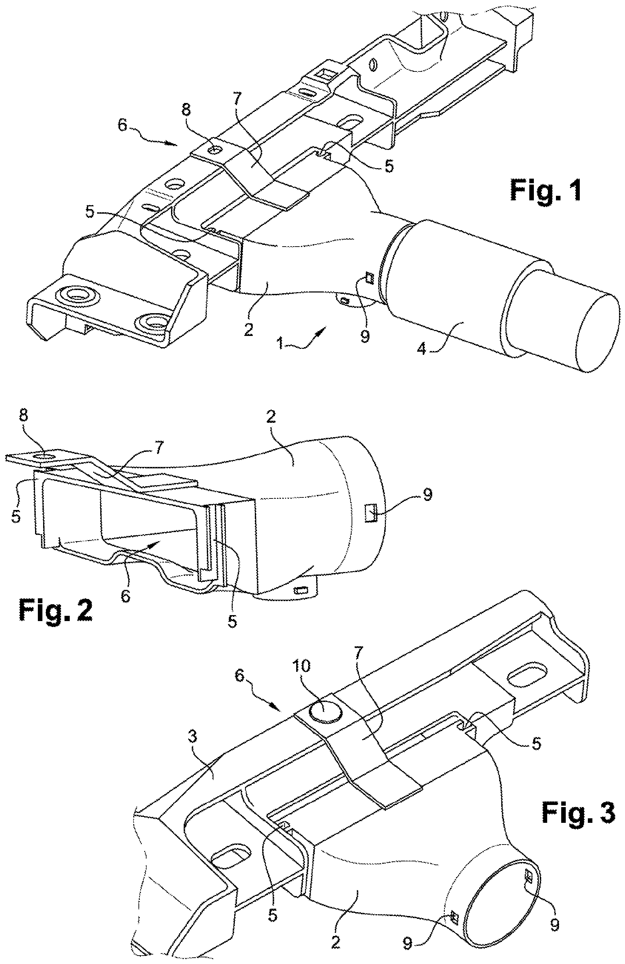

Sur la figure 1, la ligne d'admission d'air 1 comporte un embout 2 de ligne d'admission d'air comportant en partie avant une interface avec une façade technique 3 ou autre(s) pièce(s) d'admission d'air du véhicule et en partie arrière une interface avec un col d'entrée d'air 4.

Selon la présente invention, et en se reportant sur les figures 1 à 3, l'interface de l'embout 2 avec la façade 3 ou autre(s) pièce(s) d'admission d'air comporte une première interface constituée de deux moyens de guidage 5, verticaux, disposés chacun d'un côté d'une traverse 6 d'ouverture d'air, et une seconde interface en partie supérieure sous forme d'une languette 7 comprenant au moins un orifice 8 destiné à recevoir tout moyen de fixation 10 pour maintenir ledit embout 2 sur la façade 3 ou autre(s) pièce(s) d'admission d'air.

Tel qu'illustré plus particulièrement sur la figure 3, la seconde interface en partie supérieure de l'embout 2 est une languette 7 en forme en Z épousant la façade 3 ou autre(s) pièce(s) d'admission d'air. Elle comprend un orifice 8 qui reçoit un moyen de fixation 10, tel qu'un rivet ou une vis, pour maintenir ledit embout 2 sur la façade 3 ou autre(s) pièce(s) d'admission d'air. La languette 7 est sensiblement centrée par rapport à la traverse 6 et aux deux moyens de guidage 5 de chaque côté de la traverse 6.

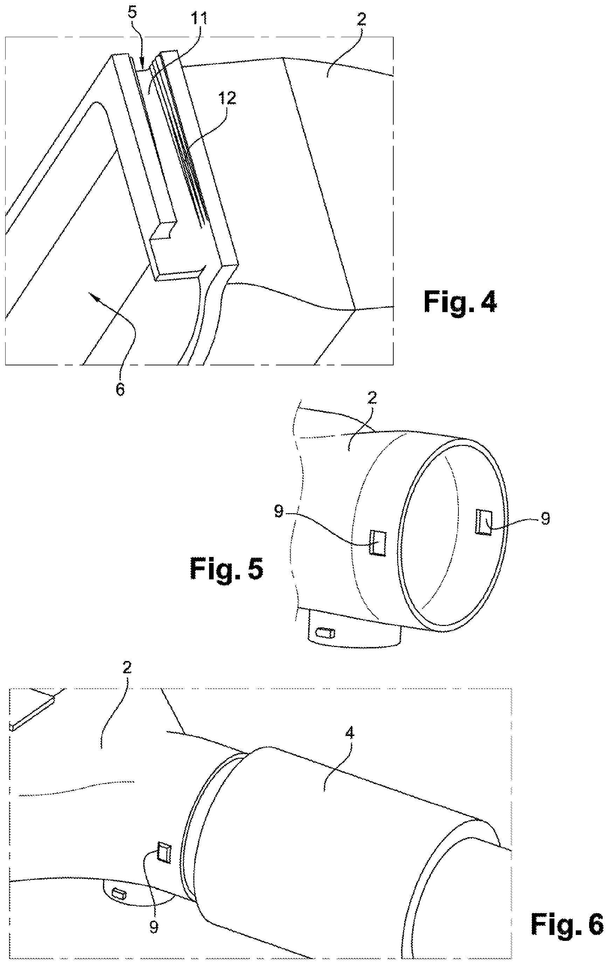

Sur la figure 4, les moyens de guidage 5 de la première interface de l'embout 2 avec la façade 3 ou autre(s) pièce(s) d'admission d'air sont des glissières 11 anti-bruit en dépouille et incrustées d'ergots 12 pour avoir un contact ponctuel. Les glissières 11 présentent chacune un espace sensiblement en U servant de butée et incrustées d'ergots 12 dans lesquels vient se pincer, de manière réversible, la façade 3 ou autre(s) pièce(s) d'admission d'air de chaque côté de la traverse 6, chaque glissière 11 étant sensiblement orthogonale à la traverse 6 d'ouverture d'air.

L'embout 2 est ainsi principalement optimisé sur son interface avec la façade 3 ou autre(s) pièce(s) d'admission d'air au niveau de la traverse 6, qui est la source majeure des vibrations.

Selon la présente invention, et en se reportant sur les figures 1, 5 et 6, l'interface de l'embout 2 avec le col d'entrée d'air 4 comporte deux orifices 9 dans lesquels vient se cliper, de manière réversible, le col d'entrée d'air 4.

L'embout 2 servant d'embout de ligne d'admission d'air ne dispose pas de zone de découplage vibratoire, cette partie étant avantageusement sur le col d'entrée d'air 4 pour une conduite portant la fonction découplage vibratoire.

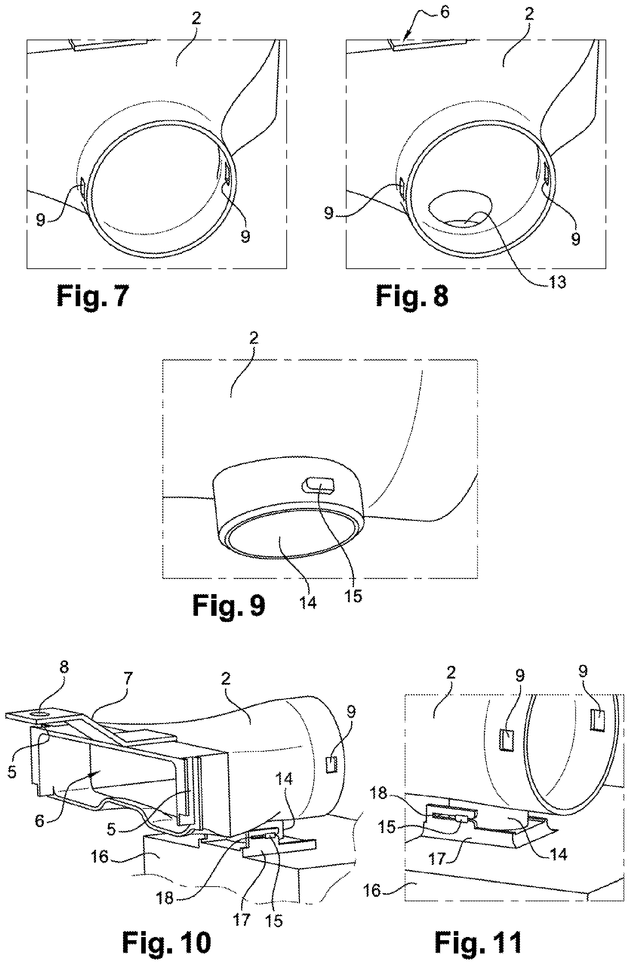

Tel qu'illustré sur la figure 8 par comparaison avec la figure 7, selon un mode avantageux de l'invention, l'embout 2 comporte en outre en partie inférieure une interface additionnelle composée d'un orifice 13 apte à recevoir un moyen de clipage avec un résonateur ou à intégrer un système de volet anti-neige. L'orifice 13 en partie inférieure est sensiblement circulaire et centré par rapport à la traverse 6 d'ouverture d'air. Il est disposé sur une face concave de l'embout 2 à proximité de l'interface avec le col d'entrée d'air 4, sans toutefois interférer avec le col d'entrée d'air 4 qui vient se cliper au niveau des deux orifices 9. Il est ainsi le plus éloigné possible de l'interface avec la façade 3, et plus particulièrement la traverse 6 d'ouverture d'air qui est la source principale des vibrations.

Un pavé dans le moule de fabrication d'un tel mode de réalisation avantageux de l'embout 2 peut permettre d'obturer cette interface additionnelle composée d'un orifice 13 en cas de besoin.

Sur la figure 9, un moyen de clipage 14 par exemple avec un résonateur est disposé dans l'orifice 13 au niveau de l'interface additionnelle. Il est creux de sorte à laisser s'écouler l'air, sensiblement circulaire et s'incorpore dans l'orifice 13. Il présente une interface comportant deux taquets 15 aptes à permettre l'accrochage avec par exemple un résonateur.

Sur les figures 10 et 11, l'embout 2 est accroché à un résonateur 16 par l'intermédiaire du moyen de clipage 14 au niveau d'un moyen d'accrochage 17 comportant deux fentes 18, en partie supérieure du résonateur 16. Les deux taquets 15 du moyen de clipage 14 se clipent et coulissent concomitamment et horizontalement dans chaque fente 18 complémentaire. Une fois clipés, ils viennent en butée, verticalement, au niveau des fentes 18 afin de maintenir l'embout 2 accroché, de manière réversible, au résonateur 16. Le résonateur 16 doit cependant avoir un autre point de fixation de par son poids, par exemple sur un brancard ou sur une traverse du châssis du véhicule. Le moyen de clipage 14 est disposé de telle sorte qu'il permet l'écoulement de l'air depuis la façade 3 ou autre(s) pièce(s) d'admission d'air via la traverse 6 de l'embout 2 vers le résonateur 16, par exemple par l'intermédiaire d'un clapet intégré au moyen d'accrochage 17 au niveau de la face supérieure du résonateur 16. Le résonateur 16 forme une réserve d'air préalablement à l'admission de ce dernier à l'intérieur du moteur à combustion interne. Il permet également d'absorber certaines ondes de pression et de diminuer les nuisances sonores d'admission.

L'embout 2 est avantageusement réalisé en matière plastique. Il présente ainsi une résistance suffisante tout en étant facile et pas cher à fabriquer et facile à assembler.

Un tel embout est optimisé pour s'adapter avec l'interface la plus contraignante au niveau de la façade. Le développement d'une façade n'évoluant que très peu après le premier AMC (Moyens Acceptables de Conformité), cet embout n'est avantageusement développé qu'une seule fois et peut être standardisé pour tous les moteurs, à condition que l'environnement moteur le permette. Il permet ainsi des gains en termes de recherche et développement et minimise l'impact au niveau des fournisseurs, notamment en cas d'évolution de la façade.

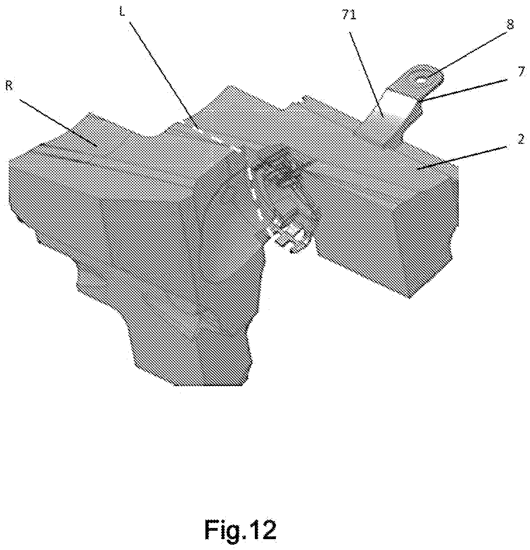

La figure 12 représente un embout 2 avec une languette 7' très légèrement modifiée, sa section est en un Z un peu adouci par rapport à la languette précédemment décrite : sa face supérieure 71 (telle que représentée, en position de montage) est maintenant pour partie courbe, avec une concavité tournée vers le haut, son extrémité munie de l'orifice 8 restant plane. Cette figure représente un exemple d'intégration d'un résonateur R dans l'embout : la partie résonateur R de l'embout 2 étant délimitée à la figure par la ligne en pointillés L. On gagne ainsi en compacité et en étape de montage. Cette intégration a amené à déplacer un peu le positionnement de la languette 7 par rapport au reste de l'embout selon l'axe Y (axe correspondant à l'axe transversal sur le véhicule).

## Revendications

1. Embout (2) de ligne d'admission d'air (1) d'un moteur à combustion interne d'un véhicule automobile comportant en partie avant une interface avec une façade technique (3) ou autre(s) pièce(s) d'admission d'air du véhicule et en partie arrière une interface avec un col d'entrée d'air (4), l'interface avec la façade (3) ou autre(s) pièce(s) d'admission d'air comportant une première interface constituée de deux moyens de guidage (5), disposés chacun d'un côté d'une traverse (6) d'ouverture d'air, et une seconde interface en partie supérieure sous forme d'une languette (7) comprenant au moins un orifice (8) destiné à recevoir tout moyen de fixation (10) pour maintenir ledit embout (2) sur la façade (3) ou autre(s) pièce(s) d'admission d'air, **caractérisé en ce que** les moyens de guidage (5) de la première interface avec la façade (3) ou autre(s) pièce(s) d'admission d'air sont des glissières (11) en dépouille et incrustées d'ergots (12) pour avoir un contact ponctuel et pincer l'embout (2) à la façade (3) ou autre(s) pièce(s) d'admission d'air.

2. Embout (2) selon l'une quelconque des revendications 1, **caractérisé en ce que** la seconde interface est une languette (7) en forme en Z épousant la façade (3) ou autre(s) pièce(s) d'admission d'air.

3. Embout (2) selon l'une quelconque des revendications précédentes, **caractérisé en ce que** l'interface avec le col d'entrée d'air (4) comporte au moins deux orifices (9) dans lesquels vient se cliper le col d'entrée d'air (4).

4. Embout (2) selon l'une quelconque des revendications précédentes, **caractérisé en ce qu'**il comporte en outre en partie inférieure une interface additionnelle composée d'un orifice (13) apte à recevoir un moyen de clipage (14) avec un résonateur (16) ou à intégrer un système de volet anti-neige.

5. Embout (2) selon l'une des revendications 1 à 3, **caractérisé en ce qu'**il intègre un résonateur (R).

6. Embout (2) selon l'une quelconque des revendications précédentes, **caractérisé en ce qu'**il est réalisé à base de matériau polymère.

7. Ligne d'admission d'air (1) d'un moteur à combustion interne d'un véhicule automobile équipée d'un embout (2) selon l'une quelconque des revendications précédentes en tant que pièce intermédiaire entre la façade technique (3) ou autre(s) pièce(s) d'admission d'air du véhicule et le col d'entrée d'air (4).

8. Moteur à combustion interne équipé d'une ligne d'admission d'air (1) selon la revendication précédente.

9. Véhicule automobile équipé d'un moteur à combustion interne selon la revendication précédente.

## Patentansprüche

1. Endstück (2) einer Luftansaugleitung (1) einer Brennkraftmaschine eines Kraftfahrzeugs, das im vorderen Teil eine Schnittfläche mit einer Bedienkonsole (3) oder einem oder mehreren anderen Luftansaugteilen des Fahrzeugs umfasst, und im hinteren Teil eine Schnittfläche mit einem Endstück des Luftansaugkanals (4), wobei die Schnittfläche mit der Fassade (3) oder einem oder mehreren anderen Luftansaugteilen eine erste Schnittfläche umfasst, die aus zwei Führungsmitteln (5) besteht, die jeweils auf einer Seite eines Luftöffnungsquerträgers (6) angeordnet sind, und einer zweiten Schnittfläche im oberen Teil in Form einer Lasche (7), die mindestens eine Öffnung (8) umfasst, die dazu bestimmt ist, ein beliebiges Befestigungsmittel (10) aufzunehmen, um das Endstück (2) auf der Fassade (3) oder einem oder mehreren anderen Luftansaugteilen zu halten, **dadurch gekennzeichnet, dass** die Führungsmittel (5) der ersten Schnittfläche mit der Fassade (3) oder einem oder mehreren anderen Luftansaugteilen Gleitschienen (11) im Freiwinkel sind, die mit Dornen (12) besetzt sind, um einen punktförmigen Kontakt zu haben und das Endstück (2) der Fassade (3) oder das eine oder die mehreren anderen Luftansaugteile einzuklemmen.

2. Endstück (2) nach einem der Ansprüche 1, **dadurch gekennzeichnet, dass** die zweite Schnittfläche eine Lasche (7) in Z-Form ist, die sich an die Fassade (3) oder ein oder mehrere andere Luftansaugteile legt.

3. Endstück (2) nach einem der vorstehenden Ansprüche, **dadurch gekennzeichnet, dass** die Schnittfläche mit dem Endstück des Luftansaugkanals (4) mindestens zwei Öffnungen (9) umfasst, in welchen sich das Endstück des Luftansaugkanals (4) clipst.

4. Endstück (2) nach einem der vorstehenden Ansprüche, **dadurch gekennzeichnet, dass** es außerdem im unteren Teil eine zusätzliche Schnittfläche umfasst, die aus einer Öffnung (13) besteht, die geeignet ist, um ein Clipsmittel (14) mit einem Resonator (16) aufzunehmen, oder ein Schneeschutzklappensystem zu integrieren.

5. Endstück (2) nach einem der Ansprüche 1 bis 3, **dadurch gekennzeichnet, dass** es einen Resonator (R) integriert.

6. Endstück (2) nach einem der vorstehenden Ansprüche, **dadurch gekennzeichnet, dass** es auf der Basis eines Polymermaterials hergestellt ist.

7. Luftansaugleitung (1) einer Brennkraftmaschine eines Kraftfahrzeugs, die mit einem Endstück (2) nach einem der vorstehenden Ansprüche als Zwischenteil zwischen der Bedienkonsole (3) und einem oder mehreren anderen Luftansaugteilen des Fahrzeugs und dem Endstück des Luftansaugkanals (4) ausgestattet ist.

8. Brennkraftmaschine, die mit einer Luftansaugleitung (1) nach dem vorstehenden Anspruch ausgestattet ist.

9. Kraftfahrzeug, das mit einer Brennkraftmaschine nach dem vorstehenden Anspruch ausgestattet ist.

## Claims

1. An end-piece (2) of an air inlet line (1) of an internal combustion engine of a motor vehicle comprising, at the front part, an interface with a technical face (3) or other air inlet part (s) of the vehicle and, at the rear part, an interface with an air intake conduit (4), the interface with the face (3) or other air inlet part(s) comprising a first interface constituted by two guide means (5), each disposed on one side of an air opening crossmember (6), and a second interface at the upper part in the form of a tongue (7) including at least one opening (8) intended to receive any attachment means (10) for holding the said end-piece (2) on the face (3) or other air inlet part(s), **characterized in that** the guide means (5) of the first interface with the face (3) or other air inlet part(s) are slides (11) which are drafted and are inlayed with lugs (12) so as to have a point contact and to catch the end-piece (2) at the face (3) or other air inlet part(s).

2. The end-piece (2) according to any one of Claims 1, **characterized in that** the second interface is a Z-shaped tongue (7) fitting the face (3) or other air inlet part(s).

3. The end-piece (2) according to any one of the preceding claims, **characterized in that** the interface with the air intake conduit (4) comprises at least two openings (9) in which the air intake conduit (4) comes to be clipped.

4. The end-piece (2) according to any one of the preceding claims, **characterized in that** it further comprises in the lower part an additional interface composed of an opening (13) able to receive a clipping means (14) with a resonator (16) or able to integrate an anti-snow flap system.

5. The end-piece (2) according to one of Claims 1 to 3, **characterized in that** it integrates a resonator (R).

6. The end-piece (2) according to any one of the preceding claims, **characterized in that** it is made based on polymer material.

7. An air inlet line (1) of an internal combustion engine of a motor vehicle equipped with an end-piece (2) according to any one of the preceding claims as an intermediate part between the technical face (3) or other air inlet part(s) of the vehicle and the air intake conduit (4).

8. An internal combustion engine equipped with an air inlet line (1) according to the preceding claim.

9. A motor vehicle equipped with an internal combustion engine according to the preceding claim.
